# EUROPEAN PATENT SPECIFICATION

(11) **EP 2 283 934 B1**
(45) Date of publication and mention of the grant of the patent: **28.11.2018**
(21) Application number: 09735131.6
(22) Date of filing: 30.03.2009
(51) Int. Cl.: B05D 3/06, C09D 11/00, C09D 133/08, B41F 23/04

(54) **METHOD FOR CURING A SUBSTANCE, DEVICE FOR CARRYING OUT SAID METHOD AND INK**
VERFAHREN ZUM HÄRTEN EINER SUBSTANZ, VORRICHTUNG ZUR DURCHFÜHRUNG DES VERFAHRENS UND TINTE
PROCÉDÉ DE DURCISSEMENT D'UNE SUBSTANCE, DISPOSITIF POUR SA MISE EN OEUVRE ET ENCRES

(30) Priority: 22.04.2008 RU 2008115985; 22.04.2008 RU 2008115986
(43) Date of publication of application: 16.02.2011
(73) Proprietor: Mirchev, Vladislav Yurievich, 8560 Peyia, Paphos distr. (CY)
(72) Inventor: Mirchev, Vladislav Yurievich, 8560 Peyia, Paphos distr. (CY)
(74) Representative: Icosa
(86) International application number: PCT/RU2009/000151
(87) International publication number: WO 2009/131490

(56) References cited:
- WO-A1-98/27171
- WO-A1-2006/093765
- WO-A1-2008/009987
- RU-C2- 2 180 669
- US-A1- 2002 086 914
- US-A1- 2004 135 159
- US-A1- 2004 164 325
- US-A1- 2004 166 249
- US-A1- 2005 154 075
- US-A1- 2005 222 295

## Description

### TECHNICAL FIELD

The invention is related to full-color large-format printing on substrates of different materials, such as flexible and sheet polymers, glass, metal, ceramic, wood products, etc.

### BACKGROUND OF THE RELATED ART

Large-format printing, such as digital multicolor ink-jet printing on roll substrates, is one of the most popular methods of production of advertising materials, high-quality reproductions and other pictorial images. It is used to create both the interior objects, such as large-format wall banners, posters, window advertisements, mobile stands and light panels at trade fairs, and exterior (outside/outdoor) objects, such as posters, large format banners, outdoor signs, standers, light boxes, etc. In this case, advances in large-format printing are developed constantly, for example, high-quality printing on fabric to manufacture flags, cross-street banners, stands, posters, printing on canvas for creation of high-quality reproductions of paintings and posters for setting of interior design of shops, restaurants, hotels, as well as printing on pressure-sensitive film, building grids, translucent paper and film, etc.

Various requirements apply to different printing objects. Thus, if for exterior printing 180-360 dpi resolution is sufficient, interior printing often must have 720-2880 dpi resolution. 360 dpi resolutions is suitable to print banners and posters that do not require photographic-quality, 720 dpi resolution is sufficient for artistic works of photographic-quality, accurate rendition of colors, and 1440 dpi is used for a high-precision rendition of underhues, midtones, lines and color when printing highly artistic creation of photographic quality with the highest resolution. Such printing is used when producing art gallery and museum painting reproductions.

The image should be contrasted, saturated, bright and clear and the one should deliver the tiniest details of the source file. It may be achieved using a special printing and post-printing equipment, as well as supplies, for example, ink or paint, and special technologies.

To ensure high printing quality, the spreading of ink or paint on the substrate is absolutely unacceptable, and therefore, special methods of rapid ink curing, upon printing, devices for fast ink curing and special inks, are needed.

The method of rapid curing of agents by UV radiation is known as the one, which is intended for UV curing of ink, coatings, varnishes, by which the substance that includes photo initiators, is affected by UV-radiation from light emitting diodes and fluorescent lamps in a wide range of wavelengths. The intensity of UV radiation is controlled depending on the properties of curing agents and curing conditions, maintaining the constant temperature of UV LEDs.

For example, a printing method and a device for printing, where the ink curing is carried out by ultraviolet (UV) radiation are known, see for example U.S. patent No. 7,137,696. The method includes the impact on the ink dots that are deposited on the substrate when printing by UV radiation from the primary light source, using a plurality of UV LEDs. With such exposure, partial polymerization occurs, as well as consolidation, coagulation, and the transformation of the ink dots in a gel that prevents stain appearance and ink spreading.

After exposure of the ink dots to UV radiation of the LEDs, they are exposed to UV radiation from the secondary source of UV light, including at least one fluorescent lamp, which is a source of minor light. In this case, the ink dots are fully polymerized, and they are both consolidated and coagulated. The primary light source should be located above the substrate, i.e., over ink dots, and the secondary light source should be located under the substrate.

A method of substance polymerization and device for its implementation are known, where the substance curing occurs with irradiation by semiconductor radiation, that has both wavelength and energy that are capable to initiate a photoreaction, see U.S. patent No. 6,683,421. The light-emitting or laser diodes may be single, or gathered together and forming set of diodes.

A method of agent curing by UV radiation and device for its implementation that is designed for curing of inks, coatings or adhesives that contains UV photoinitiators, by means of their irradiation by UV LEDs in two stages, where the wavelengths at the first and second stage of irradiation are different and correspond to wavelength range of 180 nm-420 nm, are known, see U.S. patent No. 7,211,299. In the device, the UV LEDs are assembled in rows, and they radiate the light in a specified range of wavelengths. UV LEDs rows radiating the light in the visible spectrum can be arranged so that it was possible to visually monitor device operation. The device is equipped with a UV LEDs cooling system that supports their desired temperature, which provides the necessary light intensity. UV LEDs are arranged at such a distance from the curable agent so as to provide uniformity of the light, which is emitted from the UV LEDs.

A special method for more uniformly and quickly curing products with a scratch-resistant UV curable coating or UV curable printing thereon with high intensity UV light, is known, see U.S. patent No. 10/908,651 and U.S. patent No. 10/907,180. In those methods for ultraviolet (UV) curing of inks, coatings and adhesives having UV photo initiators therein which, when exposed to UV light, convert monomers in the inks, coatings and adhesives to linking polymers to solidify the monomer material and are placed on a variety of products using one or more super high power ultraviolet light-emitting diode (UV-LED) modules. But those methods do not disclose that the named radiation of UV LEDs corresponds to the region of the spectrum where the named photoinitiators, contained in the curable agent, have maximum sensitivity and that the UV LEDs are sequentially fed by current pulses with frequency of 1 kHz - 10 MHz.

A method and apparatus for printing a product, article or other object at a printing station and for enhancing the application of UV light at a curing station to UV photo initiators in a UV curable ink applied to a product, article or other object at the printing station, is known, see U.S. patent No. 10/789,020. In this method and apparatus, the ultraviolet light is emitted for curing ink on products, articles or other objects where the ink has UV photo initiators which, when exposed to UV light, convert monomers in the ink, to linking polymers to solidify the monomer material. But this method does not disclose that the named radiation of UV LEDs corresponds to the region of the spectrum where the named photoinitiators, contained in the curable agent, have maximum sensitivity and that the UV LEDs are sequentially fed by current pulses with frequency of 1 kHz - 10 MHz.

A UV curing apparatus and method is provided for enhancing UV curing of inks, coatings and adhesives having UV photo initiators therein by subjecting the UV curable inks, coatings or adhesives to UV light at different wavelengths, is known, see U.S. patent No. 10/753,947. In this apparatus, the ultraviolet light is emitted at different wavelength emissions, and arranged in a random, interleafed, mixed or sequential arrangement to cure UV curable inks, coatings or adhesives of varying thickness and/or having selected pigments and additives therein. The inks, coatings or adhesives have UV photo initiators which, when exposed to UV light, convert monomers in the inks, coatings or adhesives to linking polymers to solidify the monomer material. This apparatus does not disclose that the named radiation of UV LEDs corresponds to the region of the spectrum where the named photoinitiators, contained in the curable agent, have maximum sensitivity and that the UV LEDs are sequentially fed by current pulses with frequency of 1 kHz - 10 MHz.A device for implementation of this method of agent curing by UV radiation, which contains two sources of UV radiation is known: the primary UV radiation source as rows of series connected UV LEDs with different wavelengths, and UV radiation secondary source as one or more fluorescent lamps, is known, see U.S. patent No. 7,175,712. Rows of LEDs of a primary source are fixed on substrate that is installed on the radiator with air-cooling. A temperature sensor is located on the radiator and connected to the control unit of UV LEDs. If there are several rows of LEDs, the space between adjacent rows is shifted by 1/x, where x is the number of rows, or the LEDs are arranged in a checkerboard pattern. To protect the UV LEDs from UV ink or other substances, a clear plastic protective sheet is used.

To prevent ink spreading, and ink stains during their fast application on the substrate, a partial or complete cure is performed, by UV radiation from the primary source of radiation of UV LEDs, which leads to thermohardening and partial polymerization and/or transformation of ink droplets in the gel. Termination of ink curing should be performed by UV radiation effect from the UV radiation secondary source, i.e., one or more fluorescent lamps. Between UV-cured ink, coatings, varnishes and sources of UV radiation, it is possible to create oxygen free zone of inert gas, for example, helium, which is anaerobic, to increase UV photo-initiators' performance.

The UV radiation primary source consists of UV LEDs rows, where adjacent LEDs have different wavelength at least within two different ranges. UV LEDs with different wavelengths are arranged in a random, mixed or sequential order. To achieve more diversified wavelengths, the UV radiation secondary source is used, including one or some fluorescent lamps, and phosphorus compounds that are designed to intensify the radiation with a given wavelength. For example, the type 2011S fluorescent lamp provides radiation with 351 nm wavelength, type 2052 - 371 nm, type 2092 - 433 nm, and type 2162 - 420 nm. Also, UV LEDs with 400 nm wavelength are used, because with wavelength increasing, the efficiency factor of LEDs increases, which allows to increase the capacity of UV radiation effectively. Preferably, alternating the UV LEDs in rows so that the radiation of LEDs with different wavelengths within the range between 180 nm and 420 nm is used.

Thick polymer curing requires UV radiation with longer wavelength. The surface curing requires UV radiation with shorter wavelength. The pigmental coatings curing are improved by UV radiation with a wavelength that is different from that absorbed by the pigments. This also relates to the absorbing properties of resins and additives of ink, coatings and adhesives.

In addition, some UV LEDs can radiate light in the visible part of the spectrum, so that the user can visually observe whether the device operates or not. Air cooling system provides the desired temperature of UV LEDs at the desired radiation intensity. the air cooling system consists of a radiator with the UV LEDs on the substrate and a fan in order to maintain a constant temperature of the UV LEDs, substrate temperature or radiation intensity The substrate cooling improvement maintains the substrate temperature at a constant level, thereby stabilizing the constant radiation intensity, because UV LEDs heating can lead to radiation intensity decrease.

The individual set of UV LEDs is also used in order to provide the same voltage drop across each UV LED and thus to achieve the same current and radiation across each UV LED of a group that is paralleled. The current decrease in conducting direction between the UV LEDs varies from 5% to 10%, thereby the losses across individual UV-LEDs are minimized.

The distance between the UV radiation source and curing agent should be selected for equal radiation intensity at all points of the substance irradiated surface.

The UV LEDs control unit is designed for turning on and off UV LEDs, as well as to stabilize the radiation intensity of UV LEDs. To avoid UV LEDs overheating periodically, the power supply turn on and turn off with relatively high frequency. The period depends on the UV radiation intensity.

The above-described method of substance curing by UV radiation and device to implement it has significant disadvantages.

The known method of substance curing by UV radiation and device for its implementation uses fluorescent lamps, and hence it has all the drawbacks that are related to fluorescent lamps, such as low efficiency factor, high operating temperature, short life, low environmental friendliness due to ozone release, a large power consumption, restraining the area of their application. In particular, this method cannot be used in piezo-ink-jet full-color printers with various types of print heads to get full-color image on surfaces of various materials such as flexible and sheet polymers, glass, metal, ceramics, wood, etc., and at the same time providing a high cure rate of a sufficiently thick layer of UV curable substance.

Use, at the same time, of both fluorescent lamps and UV LEDs also complicates the process and increases the cost of agent curing by UV radiation.

The range of UV radiation device is too broad; in this case it does not take into account that a photoinitiator has a maximum sensitivity in a narrow spectrum, i.e., its physical and chemical properties are not taken into account. Since the known photoinitiators have maximum sensitivity in the wavelengths range not more than 365 nm, the use of LEDs having radiation with longer wavelength is not effective. The use of UV radiation for agent curing with a broad spectrum of radiation is not effective because it leads to decrease of UV radiation intensity in that part of the spectrum, where the photoinitiators included in the composition of the cured substance have a maximum sensitivity. Reducing the number of LEDs, to which a photoinitiator reacts and implementing the LEDs with longer wavelength, e.g., 400 nm, results in effective radiation power decrease at the wavelength for which the photoinitiator is designed. The use of LEDs with radiation in the visible spectrum to control of the radiator efficiency also makes reducing the radiation power of that wavelength, where the photoinitiator has the highest sensitivity. In addition, the radiation location is such that the radiated and the irradiated surfaces are practically invisible when the radiator operates.

Control of LEDs radiation intensity by sensor readings of radiation intensity, as well as with use of feedback and stabilization of the temperature, is not effective. In LEDs, with the temperature increasing, the degradation of the crystal occurs, and the higher the temperature, the greater the degradation. Due to the crystal degradation in the LEDs, radiation intensity decreases. When the light sensor records the decrease of UV radiation intensity of degrading crystal, the cooling system is trying better to cool the radiator, to lower the temperature of the LEDs and to increase the intensity LEDs radiation. Since UV radiation increase does not occur in this case, the cooling system will operate at maximum performance. Such radiation intensity control system is not effective, because it does not allow preventing the crystal degradation of LEDs, since they do not locate on the radiator, once the substrate is mounted on the radiator. As a result the UV radiation intensity of the LEDs is reduced.

Because the LEDs portion is included in the parallel circuits and in this case the LEDs have radiation with different wavelengths, the current in the circuits should be chosen with a deviation of 5% to 10%. The need for such selection leads to the increase of the cost of the process of UV substance curing. In addition, after LEDs heat up their internal resistance and, consequently, the current through the LEDs changes, resulting in the different LEDs radiation intensity. Besides the use of different types of LEDs radiating light with different wavelength and having different characteristics complicates the LEDs control system.

The above-mentioned deficiencies, lead to limitation in both field of use of the method of agent curing with UV radiation and device for its implementation, due to inability to use, for example, in piezo-ink-jet full-color printers with different types of print heads to get full-color image on surfaces of various materials such as flexible and sheet polymers, glass, metal, ceramics, wood, etc., due to low UV radiation intensity in the part of the spectrum, where the photoinitiators have a maximum sensitivity, and due to inability to provide high speed of curing a sufficiently thick layer of UV curing agents.

Existing inks that are curable by UV radiation are described and they usually have a viscosity that is not more than 35 cP (35.10⁻³ Pa.s) at 30 °C ; may contain a coloring component, a diluent and/or at least one photopolymerization catalyst;the diluent may consist in monofunctional and multifunctional materials; and they may contain at least 5-30 wt.% of one oligomer (see for example U.S. patent number 6,593,390). The inks are designed for curing in a wide range of UV radiations and may not be cured in a narrow range of UV radiations.

Curable compositions are also described, containing at least one polymerizable compound with free radicals or a compound that includes at least one mono-, di-, tri-or tetrafunctional acrylate monomer and / or at least one mono-, di-, tri-or tetrafunctional oligomer with functional acrylate group and at least one photo-latent compound that may be activated by plasma discharge (see for example Application of Russian Federation No. 2004133886, IPC C08F2/52). However, in the printers it is not possible to use plasma discharges as quantum supplier. The main deficiency of denoted compositions is their high viscosity that does not provide adequate print quality with piezo-ink-jet printers. UV curing printer's inks are known;they are mainly cut-and-dried, suitable for a wide spectrum of UV radiation lamps, may contain pigment, oligoester acrylate and modified epoxy-diane resin; as modified epoxy-diane resin may be cited acrylated epoxy-diane resin with molecular weight of 550-600 - the product of interaction of equivalent amounts of (meth) acrylic acid and epoxy-diane resin with molecular weight of 400-500; and they additionally may contain a photoinitiator, co-initiator is benzoyl peroxide and / or dinitrileazobisisobutyric acid, thixotropic agent is aerosil, defoamer - polydimethylsiloxane fluid and inert inorganic filler (see for exampleApplication of Russian Federation No. 2055741).

This type of inks per their rheological properties, primarily because of increased viscosity do not allow getting high-quality printing on large- formatting full-color piezo-ink-jet printers, i.e. they have limited field of use. In addition, high speed of ink curing (about 1-2 sec. at specific irradiation power of 30 W / cm) is reached only in the case where paint layers thickness is 1-1.5 µm which is typically for offset printing. In the case of image printed with piezo-ink-jet printer, where the thickness of the paint layer is about 20 µm, the curing time for such paint increases dramatically. Moreover, photoinitiators used in the above-described inks, do not provide the maximal sensitization in spectrum part of ultraviolet radiation with 365 nm wavelength that have the most powerful of the UV-LEDs, which are the most effective and economic sources of UV radiation that are used in modern large-format piezo-ink-jet printers currently.

### DISCLOSURE OF INVENTION

The invention aims to create a comprehensive solution for implementation of full-color large-format printing on surfaces of various materials: flexible and sheet polymers, glass, metal, ceramics, wood, etc., by means of piezo-ink-jet full- color printers with different types of print heads and providing high-speed curing of UV curable material, during printing. To solve this task, a new method of substance curing by UV radiation, and device for its implementation, and UV-curable inks are herein proposed.

A method of substance curing includes the impact on the curable substance that contains photoinitiators that is applied to the surface of the substrate by means of UV LEDs radiation. The LEDs UV radiation corresponds to the spectrum region, where the photoinitiators contained in the curable substance have a maximum sensitivity, and the current pulses are delivered with frequency of 1 kHz - 10 MHz to UV LEDs arranged in series.

UV LEDs are used to implement the method to achieve the same spectrum of radiation. It is possible to control UV LEDs radiation intensity by variation of the frequency and/or current magnitude and/or current pulses ratio, so that the average dissipation power of UV LEDs approaches a maximum. The frequency, magnitude of current and current pulses ratio should be selected depending on the energy of the polymerization of curable agent, curable agent composition, the thickness of curable agent layer, application method of curable agent on the surface, the duration of LEDs UV radiation effect on the curable agent, temperature and humidity of environment, and the characteristics of UV LEDs. A device for substance curing by UV radiation includes a UV radiation source containing UV LEDs, a control block of UV LEDs of the UV radiation source, a radiator for cooling UV LEDs, a UV LEDs temperature sensor associated with control block of UV LEDs, which has UV radiation source with the system of optical focusing. the UV LEDs control block is designed so the current pulses are delivered with frequency of 1 kHz - 10 MHz to UV LEDs arranged in series.

The UV LEDs in UV radiation source are arranged by series in rows that are formed into a line and have the same radiation spectrum. The UV LEDs control block may contain a master controller connected to peripheral computing devices, and UV LEDs power control modules, coupled with the master controller through first and second data inputs, and the power contacts are connected to the respective UV LEDs.

The temperature sensor is located on the radiator and its output is connected to the control block.

Each power module is designed as pulse controlled regulator of current. UV LEDs can be fixed on the radiator directly preferably, by soldering.

Radiator may be performed as liquid heat exchanger. Color and white UV curable ink is offered. Color UV curable ink may have the following composition, wt.%:
Pigment - 1-3;
Difunctional acrylates - 60-70;
Monofunctional acrylates - 5-10;
Multifunctional acrylates - 5-10,
Photoinitiator - 3-8;
Coinitiator or amine synergist - 2-5;
Silicone additive - 0,2-1;
Hyperdispersants - 0,02-0,1;
Codispersants - 0,02-0,1;
Photostabilizator - 0,02-1.

White UV-curable ink may have the following composition, wt.%:
Pigment - 20-30;
Difunctional acrylates - 60-70;
Photoinitiator - 3-8;
Coinitiator or amine synergist - 2-5;
Silicone additive - 0,2-1;
Hyperdispersants - 0,02-0,1;
Codispersants - 0,02-0,1;
Photostabilizator - 0,02-1.

Throughout this patent application the term wt.% means percentage in weight, to the weight of the total composition.

As examples of multifunctional acrylates, it is possible to use , for example, industrial acrylate resins of Taiwanese manufacturer of UV polymer Eternal - from 4 to 14 functional groups, EM-6362 monomer - from 12 to 14 functional groups (the manufacturer does not disclose the chemical formula), dipentaerythritolhexaacrylate - 6 functional groups, propoxylatepentaerythrinoltetraacrylate. Content of multifunctional monomers in the ink is up to 10 wt.% that is determined by upper and lower limits of ink viscosity.

These multifunctional monomers have highly active C = C bonds that gives a high rate of curing to ink. Quantity of multifunctional monomers that is less than 5 wt. %, significantly impairs the ink photosensitivity (hardening rate), the adhesion to nonabsorbent substrates and image stability to external impacts. Resin concentration that is more than 10 wt. % leads to an unacceptably high viscosity of the ink due to the high viscosity of the multifunctional monomers and, consequently, to poor ink printing-technical properties. The most preferred content of multifunctional monomers is 5 -10 wt.%.

UV curing ink as difunctional acrylate may include, for example, 1,6-hexanedioldiacrylate, dipropyleneglycoldiacrylate. As monofunctional acrylate the ink may contains, for example, isoboronilacrilate, octyldecylacrilate, cyclic trimethylolpropaneformalacrylate.

As pigments, the printing pigments are used, and their content in the ink is less than in the ink for the offset printing because of high pigment absorption of UV radiation, printing pigments' concentration in the ink should be minimal, and the high color intensity and ink coverage are achieved through both more ink layer thickness and less than 0.5 microns dispersion. The pigment content in the ink is 1-3 wt.% for the most pigments and for white pigment is 20-30 wt.%. In an embodiment, pigment quantity more than 3 wt.%. is undesirable because of the sharp decline of the ink curing rate, and less than 1 wt.% is undesirable due to lower intensity of ink color.

As photoinitiators are used such, the sensitization of which is maximal in a given part of the UV radiation spectrum with 365 nm wavelength that the most powerful UV-LEDs have, because at current time the UV-LEDs are the most effective and economic sources of UV radiation that are used in modern large-format piezo-ink-jet printers.

Such photoinitiators, when there is absorption of light quantum of given wavelength, emit the maximal amount of free radicals. For example, for the range with 365 nm wavelength is possible to use the following photoinitiators: the well-known compounds for similar photopolymerizable compositions, for example, derivatives of benzoyl ethers, thioxantothones, benzophenone, and others, in particular, 2,4,6-trimethylbenzoyldiphenilphosphineoxide and monoacylphosphineoxide and their mixtures. The content of photoinitiators in the ink is 3-8 wt.%. A quantity of less than 3 wt.% may not provide high cure rate, and a quantity of more than 8wt. % may be inappropriate because of both the limited solubility of these compounds in difunctional acrylates, and the too high reactivity in the upper layer of curing, resulting in that the penetration of free radicals in the depth of the ink layer is blocked, and closer to the substrate, the ink remains uncured.

The ink for large-format full-color piezo-ink-jet printing should not have thixotropic properties and it should have a surface tension less than 30 dynes/cm, and therefore their composition includes silicone additive, for example, of DOWCorning No. 57 (dimethylmethyl (polyethyleneoxideacetate) siloxane) production. The content of this silicone additive in ink provides both the required low level of thixotropy and the surface tension and is 0,2-1 wt.%. As photostabilizator, N-nitrosophenylhydroxylamine aluminum salt is used in amount of 0,02-0,5%.UV radiation narrow spectrum is due to the usage as UV radiation source of UV-LEDs of the same type, i.e. with the same wavelength. For ink curing within a narrow range at high rate, the photoinitiators with sensitization of absorption energy in a narrow part of the spectrum are required. Sensitization of the most photoinitiators falls outside the 365 nm range. And those photoinitiators that have sensitization in this part of the spectrum, do not emit enough quantity of free radicals for full ink curing on the carrier, i.e. they are poor photoinitiators. For full and rapid curing the amine synergists should be used for regeneration of free radicals as well as multifunctional acrylic monomers (4-14 functional groups) with low viscosity should be used for reactivity increase.

Oligomers input in the ink formulation are unacceptable due to their high viscosity. As the main diluents, the low-viscosity modified highly reactive difunctional acrylic monomers are used. For improvement of the physical properties of the coating (adhesion, resistance to aggressive media, the mechanical strength) the ink composition has monofunctional monomers. Ink composition should provide physical properties, dictated by the parameters of the print heads. Viscosity at temperature stabilization in the range of 20 to 45°C should not be more than 10 cp (10.10⁻³ Pa.s), surface tension is from 23 to 30 dyne/cm. Described inks are designed primarily for usage in large-format full-color piezo-ink-jet printers with UV - curing system.

The UV radiation range is divided into three sub-ranges - the short wavelength with wavelength from 200 to 280 nm, medium-wavelength with wavelength from 280 to 315 nm, and long wavelength with wavelength from 315 to 380 nm. Short wavelength UV radiation is poorly suitable for agent curing, for example, for ink in printers, whereas that radiation with wavelengths less than 280 nm causes ozone formation and is harmful to human health. Medium wavelength UV radiation, according to medical research, is harmful to health, as it causes the incurable diseases to humans, such as cataracts and melanoma. The obstacle to use short and medium wavelength ranges is the fact that LEDs in this range have a very high cost and an efficiency factor that is less than 1%.

The long wavelength UV radiation is the closest one to the natural radiation; it is least harmful to health. However, its use is fraught with difficulties. The first problem is the fact that in UV curable substances, the largest number (some tens) of photoinitiators has a maximum sensitivity at a wavelength of 300-330 nm. With maximum sensitivity at 365 nm wavelength, only some photoinitiators are sensitive, and they are fully absent at 395-400 nm wavelength. The second problem is the fact that with wavelength decreasing, the cost increases, and LEDs efficiency factor falls. The cost of a powerful radiator with 300-350 nm wavelength is very high and is economically impractical, and at 375-405 nm wavelength, the cost will be low, but there are no photoinitiators with maximum sensitivity in this range. The range of 350-375 nm is the most promising, since LEDs cost is not too high, the efficiency factor is not too low and there are photoinitiators with maximum sensitivity in this range.

As stated above, the printing ink comprises: photopolymer, photoinitiator and solid insoluble pigment that is resistant to UV radiation, which does not fade under UV radiation exposure, for example, soot for black color. Under UV radiation exposure, the photoinitiator breaks internal links. Substances resulting from the breaking, react chemically with the photopolymer. As a result of this reaction, the polymer (plastic) is formed. The main problem with this is that the pigment retains UV radiation - 90% of the radiation is delayed by 1/8 of the upper ink layer, whereby the chemical reaction occurs slowly. A twofold radiation power increase can increase the reaction rate several times. With the proper semiconductor crystal cooling, the current density can be 5-7 times higher than rating value. Therefore, to achieve a radiator high power, an efficient cooling system is needed that allows effectively cooling the crystal with power increasing and preventing both the crystal degradation and the radiation intensity reducing across the LED. The most effective and low-cost cooling system is a water cooling system.

For penetration of UV radiation as deeply as possible in the ink layer, it is better to use a powerful short pulse, than the long-term exposure of the surface with radiation of low power. It is optimal to use short and powerful pulses, allowing radiation to penetrate deep into a sufficiently thick ink layer, and at the same time have big pulse ratio for crystal cooling in LEDs between pulses.

In order to determine accurately the pulse power and prevent crystal overheating, a current stabilizer is used. The current stabilizer is designed for stabilization of the current flowing through the LEDs that allows, by knowing the voltage drop across the LED, to calculate accurately the pulse power and limit the current through LED, to avoid its destruction. Pulse repetition frequency is calculated by taking into account the following conditions. Since the carriage moves over the material at speed of 1.5 m/sec, and the radiation should penetrate into each point of the surface, and taking into account the width of both separate LED and radiator, it is possible to calculate the frequency of radiation pulses. For example, for 1 second at a maximum speed the printer carriage moves by 1500 mm, at frequency of 1000 Hz between two pulses, the carriage will move by 1.5 mm. At a frequency of 10,000 Hz printer carriage will move by 0.15 mm

For deeper penetration into the paint layer, and to accelerate the polymerization process (programmatically), the current magnitude should be increased a given number of times with a corresponding increase of duty cycle to provide LED crystal cooling, at this time acting instantaneous power increases a corresponding number of times. Frequency, duty cycle and the magnitude of current pulses through the UV LEDs depend on many factors, such as: energy ink curing (sensitivity depends on the composition and properties of ink or a UV curable agent); photopolymer being used; pigments that are applied with different ability to absorb or reflect UV radiation and the size of pigment particles; photoinitiator used and the percentage of its content, various additives, the external factors affecting the polymerization process, the curable layer thickness, the curable agents droplet size, for example, ink (depending on the applied printhead), the number of the heads (colors applied for one head pass) print head resolution (number of nozzles per inch) head operating mode, radiator velocity relative to UV curable material, the frequency of heads operating, the size of UV radiation focused beam, the distance from UV radiation source to UV curable material surface, the UV curable agent temperature; temperature and humidity of environment; power of radiation source.

The device for agent curing by UV radiation can be used in different fields of engineering, where the UV radiation exposure is needed to cure the polymer adhesives, paint coatings, inks, for example, in large-format printers. In view of the fact that ink can have different characteristics (polymerization energy, the particle size and spectrum of its absorption, used photopolymers and photoinitiators, the presence of additives, the thickness of the curable layer), the UV radiation power and the characteristics of the radiator should be selected on the basis of the characteristics of both ink and applied heads. Pulse repetition frequency of UV LEDs control should be calculated from the following conditions. Since the carriage by UV radiation source moves over the material that should be coated by UV curable inks, at the speed of 1.5 m/sec, and the UV radiation should penetrate into each point of the material surface, taking into account the width of both each separate UV LED and UV radiation source, it is possible to calculate the frequency of UV radiation source. For example, in 1 second at the maximum speed the printer carriage on XAAR 126 print heads moves 1500 mm, at a frequency of 10,000 Hz between two pulses the carriage it will have time to move by 0.15 mm.

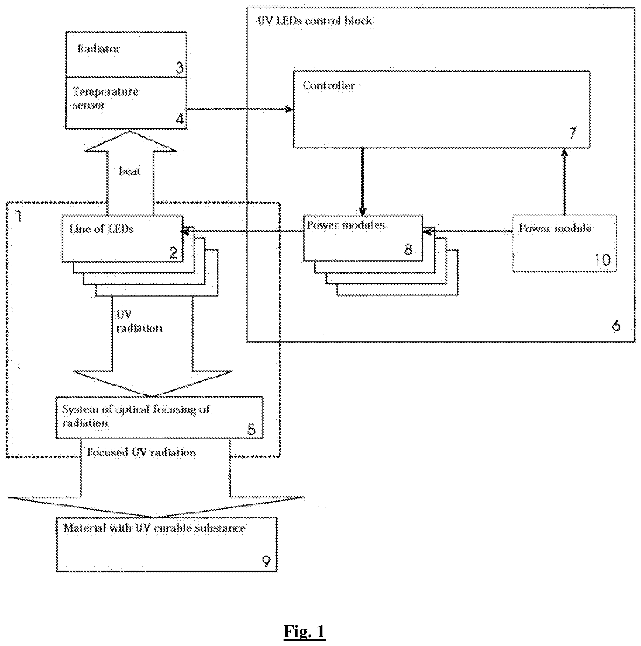

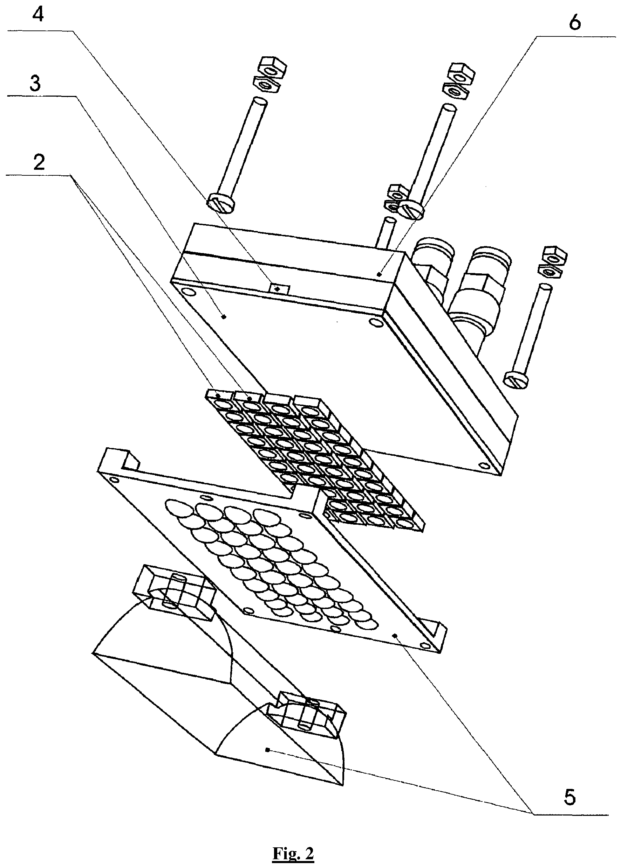

The structure diagram and method of agent curing by UV radiation is shown in FIG. 1, and the device is shown in FIG. 2. The device contains UV radiation source 1b as rows 2 of UV LEDs that are connected in series with the same spectrum radiation, corresponding to the spectrum area, where the photoinitiators of agents curing have a maximum sensitivity. Rows 2 of UV LEDs are located on the radiator 3, here, a water heat exchanger for effective UV LEDs cooling. Temperature sensor 4 is located directly on the radiator 3 and serves to control the temperature of the UV LEDs. UV radiation source 1 has system 5 to focus optical radiation, formed as a set of lenses, as shown in FIG. 2. Control block 6 is intended to generate UV LEDs control pulses and comprises a controller 7, and a block of power modules 8. The temperature sensor 4 is related to the control input of the control block 6, which is the control input of the controller 7. Series of UV LEDs 2 are fixed directly on the radiator 3, for example, by soldering. The heat from UV LEDs flows to the radiator 3, which is effectively cooled by means of water flow cooling system (not shown in figures). All UV LEDs are located in the same plane on the same surface of the radiator 3. UV LEDs that are used in the device have high power consumption, more than 1 watt per crystal, and they are mounted on the radiator 3 with high density at a minimum distance between housings. The UV LED surface is protected from damage by means of the system 5 of optical focusing of the radiation, which is a lens system for optical power increase per surface unit that are made of materials that pass UV radiation, in one direction.

Powerful UV LEDs have high heat radiation. To provide effective cooling the UV LEDs are soldered with solder (or they are attached with heat-conductive adhesive) directly to the radiator 3. Voltage input to both anode and cathode of UV LEDs should be made by conductors, insulated from the radiator 3. To provide active cooling, the UV LEDs are mounted on the cooled surface of the radiator 3 that is made as a water heat exchanger. The heat exchanger's other side is cooled with liquid. The water cooling system has a small size and allows high-power UV LEDs efficient cooling.

The control block 6 operates powerful UV LEDs with power consumption more than 1 watt per crystal. Controller 7 of block 6 is connected to both its data inputs and external control devices, for example, the "Start" button or personal computer (not shown in figures). The first and second inputs of the block of power modules 8 are connected to control outputs of the controller 7, with the output of the "current setup" analog signal and with output of "control pulses" digital signal, respectively. Power leads of each of the power modules are connected to the corresponding line 2 of UV LEDs.

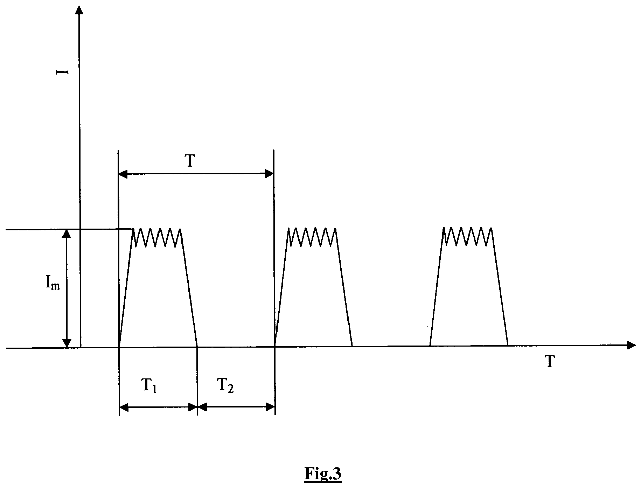

Each power module 8 can be made as pulse controlled current stabilizer with pulse-width modulation that provides the delivery of current pulses to UV LEDs in the range of frequencies from 1 kHz to 10 MHz, with this the frequency 1/T, the current magnitude and duty cycle of current pulses is determined depending on the properties of curable agent and curing conditions. The current across UV LEDs has the configuration shown in FIG. 3.

The proposed method of substances curing by UV radiation is as follows. The UV curable agent that includes photoinitiators is affected by radiation of UV LEDs, arranged line 2; the radiation spectrum of all UV-LEDs corresponds to the part of the spectrum, where the photoinitiators substances have maximum sensitivity, for example, it corresponds to 365 nm wavelength. Intensity of UV radiation source 1 is controlled depending on the properties of curable agent and curing conditions. For this purpose, the sequence of current pulses should be delivered to the UV LEDs, and their frequency is in the range from 1 kHz to 10 MHz. Control block 6 controls the frequency, duty cycle and the magnitude of current pulses, so that the average dissipation power of UV LEDs is equal to or approaches a maximum. For example, for UV LEDs, are made by NICHIA, NCCU 033 type with 365 nm wavelength, the maximum dissipation power is 3.3 W, which does not exceed a critical value that leads to the destruction of the UV LEDs (for UV LEDs of NCCU 033 type is experimentally established a critical value of dissipation power is 4.1 W).

With this the frequency, the current magnitude and duty cycle of current pulses are operated depending on the parameters: the polymerization energy of UV curable agent and its composition, the layer thickness of the UV curable agent and method of layer application, the duration of the exposure of UV radiation on substance, temperature and humidity of environment; characteristics of UV LEDs.

The device that implements above-described method works as follows. Through the interface of communication with external control devices, for example with a computer (not shown in figures) data of the working parameters is transmitted to the controller 7 of the control block 6: pulse frequency control, their duty cycle, and the maximum operating temperature and UV LEDs power. These parameters are stored in nonvolatile memory of controller 7. The switching-on of (control) block 6 should be performed from the external device of control remotely using the appropriate commands from the computer, or manually using a button (not shown in figures). Under command to activate the analog output of control block 6, an analog signal appears corresponding to a given programmed value of the current, Im, flowing through the line 2 of UV LEDs. At the digital output of the controller 7 the "control pulses" signal is formed in accordance with both the specified frequency and duty cycle of control pulses. As a result, the current pulses with frequency of 1 kHz-10 MHz are delivered to the UV LEDs serially. The controller 7 generates a "control pulses" signal as long as the command will not be released for switching on or until the temperature of the UV LEDs reaches a maximum specified temperature. Controller 7 monitors the temperature of the UV LEDs on the signal from the temperature sensor 3, which is located on the radiator 4, to which the lines 2 of UV LEDs are attached. When the signal from the temperature sensor 3 reaches the set value of the maximum operating temperature, which is stored in the memory of controller 7, in accordance with the main program it either interrupts the delivery of "control pulses" signals, or increases the duty cycle of control pulses to reduce the output power of UV LEDs, or reduces signal level at the analog output of the controller 7 to reduce the current flowing through each line 2 of LEDs. "Current setup" signal from the analog output of the controller 7 at the same time goes to all power modules 8, with the current magnitude in lines 2 of UV LEDs. The digital outputs of the controller 7 are connected to each power module 8 respectively, that allows switching each module 8 with a delay relative to each other, to reduce the peak power of device energy source (not shown in figures).

The power module 8, receiving the control signals from the controller 7, generates the current pulses in the line 2 of UV LEDs of a magnitude and a duty wide that comply with the control signals of the controller 7. When current pulses flow through UV LEDs of lines 2, they produce UV radiation and heat. Heat generated by UV LEDs, should be sent to the radiator 3 with water-cooling, where it is dissipated. UV radiation, passing through the optical system 5 forms a beam, i.e., it comes to a focus. Focused UV radiation should be directed to the substrate coated with UV curable agent. Thus, the described method of agent curing by UV radiation and device for its implementation, first, allows avoiding use of fluorescent lamps, and a higher efficiency factor, stable operating temperature, greater timing budgets, improved environmental friendliness due to ozone elimination, and less power consumption. The field of use of both proposed method of agents curing by UV radiation and device for its implementation is increased. In addition, using only UV LEDs simplifies and reduces the cost of agent curing by UV radiation. The use of UV LEDs with the same range of UV radiation provides its full compliance with the wavelength where the photoinitiator has a maximum sensitivity that increases the efficiency of agents curing.

The control of the intensity of the LEDs radiation is based on indications of UV LEDs current sensor, as well as feedback and temperature stabilization, allows reducing the crystal degradation, and increasing the radiation intensity of UV LEDs. The effectiveness of the radiation intensity is also increased due to the fact that UV LEDs are located directly on the radiator, rather than on the substrate. The fact that the temperature sensor is located directly on the radiator, rather than on the substrate, also serves to the reduce crystal degradation. Since all UV LEDs are connected in series, and all UV LEDs have the radiation with the same wavelength, it is not necessary to increase the current in LEDs, which reduces the cost of UV agent curing. In addition, in this case, the stability of the current through the UV LEDs is increased, and hence the stability of LEDs radiation intensity increases.

Also, LEDs use of the same type, radiating the light with the same wavelength and having similar characteristics, leads to simplification of LEDs control system and intensity increase of their radiation.

Consequently, the proposed invention provides a device for agent curing by UV radiation that increases the efficiency of the LEDs control system and LED cooling system due to reduction of crystal degradation of LEDs, and provides the device simplification, reducing its mass-dimensional parameters, and providing an ability providing to mount it, for example, on printer moving parts, as well as cost reduction and improvement of UV agents curing manufacturability, environmental friendliness increasing, power consumption decreasing, extending the operating life by avoiding use of fluorescent lamps and use of LEDs with the same radiation spectrum, as well as due to creation of anaerobic areas. As a result, the proposed invention can be used in piezo-ink-jet full-color printers with different types of print heads, to get full-color large-format image on surfaces of different materials, such as flexible and sheet polymers, glass, metal, ceramics, wood, etc. At the same time, the invention provides a high curing rate of UV curable material in a narrow range of UV radiation.

### BRIEF DESCRIPTION OF THE VIEWS OF THE DRAWINGS

FIG. 1 shows the block scheme of the agents curing device by UV radiation and the method,
FIG. 2 shows the design of the agents curing device,
FIG. 3 shows the timing diagram of current pulses across UV LEDs, where:
   - 1 - UV radiation source;
   - 2 - line of LEDs;
   - 3 - radiator;
   - 4 - temperature sensor of UV LEDs;
   - 5 - system of optical focusing of radiation;
   - 6 - UV LEDs control block;
   - 7 - controller;
   - 8 - power modules.

The invention is illustrated by the following examples of realization of curing of UV curable ink.

### Example 1.

The curing process of the invention is applied on the following UV curable white ink: Photoinitiators: 2,4,6-trimethylbenzoyldiphenilphosphineoxide - 50% of their total quantity;
Monoacylphosphineoxide - 20%;
Amine synergist - ethyl-4-dimethylaminobenzoat - 30%.

The ink has viscosity 29 cP (29.10⁻³ Pa.s),, at 25 °C, 11 cP(11.10⁻³ Pa.s), at 45 °C, surface tension - 24.7 dyne / cm.

The received ink should be curing rate tested by means of exposure by described UV radiation device with 365 nm wavelength of UV-LEDs while printing on NEO UV LED large-format printer with XAAR 128/40 heads. The behavior of the ink in the print heads is stable, the curing rate is high, curing time is 0.4 sec. The printing quality is excellent.

### Example 2.

The curing process of the invention is applied on the following UV curable black ink: Photoinitiators: isopropylthioxanthone - 30% of their total quantity; 2-benzyl-2-(dimethylamino)-1-[4-(4-morpholinyl) phenyl]-1-butanone (Irgaqure-369 produced by Ciba) - 10%.
monoacylphosphineoxide - 10%;
coinitiator, amine synergist ethyl-4-(dimethylamino) benzoate -50%;
The ink has viscosity- 23.4 cP, at 25 °C, 11 cP at 45 °C, surface tension - 25 dyne / cm.

The curing rate of ink should be tested by exposure of the standard UV radiation source across UV-LEDs with 365 nm radiation range. Further, the ink should be tested on NEO UV LED large-format printer with XAAR 128/40 heads. The behavior of the ink in the heads is stable, curing time is 0.4 sec. The printing quality is excellent.

### Example 3.

The curing process of the invention is applied on the following UV curable blue ink:
photoinitiators: 2,4,6 - trimethylbenzoyldiphenilphosphineoxide 0 - 20% of their total quantity;
monoacylphosphineoxide - 30%;
coinitiator, amine synergist - ethyl-4-(dimethylamino) benzoate - 50%
The ink has viscosity- 24.9 cP, at 25 °C, 9.5 cP at 45 °C, surface tension - 24.9 dyne / cm.
The ink curing should be tested on NEO UV LED large-format printer with XAAR 128/40 heads and by means of described device for UV substance curing with 365nm wavelength of LEDs. Curing time is 0.4 sec. The printing quality is excellent.

### Example 4.

The curing process of the invention is applied on the following UV curable red ink: Photoinitiators 2,4,6-trimethylbenzoyldiphenilphosphineoxide 20% of their total quantity;
monoacylphosphineoxide - 30%;
coinitiator, amine synergist - ethyl-4-(dimethylamino) benzoate- 50%;
The ink has viscosity- 24.7 cP, at 25 °C, 8.9 cP at 45 °C, surface tension - 24.5 dyne / cm.

The ink should be the curing rate tested by the exposure of the standard UV radiation source across UV-LEDs with 365 nm radiation range. Further, the ink should be tested on NEO UV LED large-format printer with XAAR 128/40 heads. The behavior of the ink in the heads is stable. Curing time is 0.4 sec. The printing quality is excellent.

### Industrial applicability

It is possible to use the invention for printing, in particular, for printing of desired image or text using the method of full-color piezo-ink-jet printing with following fixation of the impression by means of binder photopolymerization under irradiation by UV radiation in narrow spectral range. It allows receiving full-color text, graphics and barring images on flat surfaces of various materials: flexible and sheet polymers, glass, metal, ceramic, wood products, etc.

## Claims

1. A substance curing method, including the effect on the curable agent that contains photoinitiators and the one is applied to the substrate surface with the radiation of UV LEDs, **characterized in that** the named radiation of UV LEDs corresponds to the region of the spectrum where the named photoinitiators, contained in the curable agent, have maximum sensitivity, the UV LEDs are sequentially fed by current pulses with frequency of 1 kHz - 10 MHz, and the curable agent further comprises 5 to 10 wt.-% multifunctional acrylates.

2. The method according to claim **1**, **characterized in that** the UV LEDs have the same radiation spectrum.

3. The method according to claim **1** or claim **2**, **characterized in that** the UV LEDs intensity is controlled by change of the frequency and / or current magnitude and / or duty cycle of current pulses so that the average dissipation power of UV LEDs is approaching to the maximum.

4. The method according to claim **3 characterized in that** the frequency, current magnitude and duty cycle of current pulses should be selected depending on the polymerization energy of curable agent, curable agent composition, the layer thickness of curable agent, curable agent application method on the surface, UV LEDs radiation exposure time on curable agent, temperature and humidity of environment, UV-LEDs characteristics.

5. Device for agents curing comprising 5 to 10 wt.-% multifunctional acrylates by UV radiation, including UV radiation source that contains UV LEDs, UV LEDs control block of UV radiation source, radiator for cooling of UV LEDs, temperature sensor of UV LEDs connected to UV LEDs control block the device is **characterized by** the fact that UV radiation source has the system of optical focusing, and UV LEDs control unit is designed in such way that UV LEDs are received current pulses with frequency of 1 kHz - 10 MHz sequentially.

6. The device according to claim **5**, **characterized in that** the UV LEDs are arranged in series as lines.

7. The device according to claim **5** or claim **6**, **characterized in that** the UV LEDs have the same radiation spectrum.

8. The device according to anyone of claims **5-7**, **characterized in that** UV LEDs control block contains the master controller connected to peripheral computing devices, and UV LEDs control power modules, coupled with the master controller by means of its first and second data inputs, and by means of power leads they are connected to the corresponding UV LEDs.

9. The device according to anyone of claims **5-8**, **characterized in that** the temperature sensor is located on the radiator and its output is connected to the control block.

10. The device according to claim **8 characterized in that** each power module is designed as a pulse controlled regulator of current.

11. The device according to anyone of claims **5-10**, **characterized in that** the UV LEDs are located on the radiator.

12. The device according to anyone of claims **5-11**, **characterized in that** the radiator for cooling of UV LEDs is designed as liquid heat exchanger.

## Patentansprüche

1. Substanzhärtungsverfahren, das die Wirkung auf das härtbare Mittel einschließt, welches Photoinitiatoren enthält, und dasselbe mit der Strahlung von UV-LEDs auf die Substratoberfläche angewendet wird, **dadurch gekennzeichnet, dass** die genannte Strahlung von UV-LEDs dem Bereich des Spektrums entspricht, in dem die genannten Photoinitiatoren, die in dem härtbaren Mittel enthalten sind, maximale Empfindlichkeit aufweisen, die UV-LEDs nacheinander mit Stromimpulsen einer Frequenz von 1 kHz - 10 MHz gespeist werden, und das härtbare Mittel weiter 5 bis 10 Gew.-% multifunktionale Acrylate umfasst.

2. Verfahren nach Anspruch **1**, **dadurch gekennzeichnet, dass** die UV-LEDs dasselbe Strahlungsspektrum aufweisen.

3. Verfahren nach Anspruch **1** oder Anspruch **2**, **dadurch gekennzeichnet, dass** die Stärke der UV-LEDs durch Verändern der Frequenz und/oder der Stromgröße und/oder des Tastgrads von Stromimpulsen so gesteuert wird, dass sich die mittlere Verlustleistung von UV-LEDs dem Maximum annähert.

4. Verfahren nach Anspruch 3, **dadurch gekennzeichnet, dass** die Frequenz, die Stromgröße und der Tastgrad von Stromimpulsen abhängig von der Polymerisierungsenergie des härtbaren Mittels, der Zusammensetzung des härtbaren Mittels, der Schichtdicke des härtbaren Mittels, dem Anwendungsverfahren des härtbaren Mittels auf der Oberfläche, der Strahlungsexpositionszeit der UV-LEDs auf das härtbare Mittel, der Umgebungstemperatur und -feuchtigkeit, Merkmalen der UV-LEDs ausgewählt werden sollten.

5. Vorrichtung zum Härten von 5 bis 10 Gew.-% multifunktionale Acrylate umfassenden Mitteln durch UV-Strahlung,
einschließlich eine UV-Strahlungsquelle, die UV-LEDs enthält, einen Steuerblock der UV-LEDs der UV-Strahlungsquelle, einen Kühler zum Kühlen von UV-LEDs, einen Temperatursensor der UV-LEDs, der mit dem Steuerblock der UV-LEDs verbunden ist, wobei die Vorrichtung **dadurch gekennzeichnet ist, dass** die UV-Strahlungsquelle das optische Fokussiersystem aufweist, und eine Steuereinheit der UV-LEDs derart konzipiert ist, dass die UV-LEDs nacheinander mit Stromimpulsen einer Frequenz von 1 kHz - 10 MHz gespeist werden.

6. Vorrichtung nach Anspruch **5**, **dadurch gekennzeichnet, dass** die UV-LEDs als Zeilen in Reihe angeordnet sind.

7. Vorrichtung nach Anspruch **5** oder Anspruch **6**, **dadurch gekennzeichnet, dass** die UV-LEDs dasselbe Strahlungsspektrum aufweisen.

8. Vorrichtung nach einem der Ansprüche **5-7**, **dadurch gekennzeichnet, dass** der Steuerblock der UV-LEDs die Master-Steuerung enthält, die mit peripheren Rechenvorrichtungen verbunden ist, und Steuerstrommodule der UV-LEDs, die mittels ihres ersten und zweiten Dateneingangs mit der Master-Steuerung gekoppelt sind, und dieselben mittels Stromleitungen mit den entsprechenden UV-LEDs verbunden sind.

9. Vorrichtung nach einem der Ansprüche **5-8**, **dadurch gekennzeichnet, dass** der Temperatursensor am Kühler lokalisiert ist und sein Ausgang mit dem Steuerblock verbunden ist.

10. Vorrichtung nach Anspruch **8**, **dadurch gekennzeichnet, dass** jedes Strommodul als ein impulsgesteuerter Stromregler konzipiert ist.

11. Vorrichtung nach einem der Ansprüche **5-10**, **dadurch gekennzeichnet, dass** die UV-LEDs am Kühler lokalisiert sind.

12. Vorrichtung nach einem der Ansprüche **5-11**, **dadurch gekennzeichnet, dass** der Kühler zum Kühlen von UV-LEDs als ein Flüssigkeits-Wärmetauscher konzipiert ist.

## Revendications

1. Procédé de durcissement d'une substance, comprenant l'effet sur l'agent de durcissement qui contient des photoinitiateurs et celui qui est appliqué sur la surface du substrat avec le rayonnement des LEDs UV, **caractérisé en ce que** ledit rayonnement des LEDs UV correspond à la région du spectre dans laquelle lesdits photoinitiateurs, contenus dans l'agent de durcissement, ont une sensibilité maximale, et les LEDs UV sont alimentées séquentiellement par des impulsions de courant avec une fréquence de 1 kHz à 10 MHz, et l'agent de durcissement comprend de 5 à 10 % en poids d'acrylates multifonctionnels.

2. Procédé selon la revendication **1**, **caractérisé en ce que** les LEDs UV ont le même spectre de rayonnement.

3. Procédé selon la revendication **1** ou la revendication **2**, **caractérisé en ce que** l'intensité des LEDs UV est contrôlée par le changement de la fréquence et/ou de l'amplitude du courant et/ou du cycle de fonctionnement des impulsions de courant, de sorte que la puissance de dissipation moyenne des LEDs UV est proche du maximum.

4. Procédé selon la revendication **3**, **caractérisé en ce que** la fréquence, l'amplitude du courant et le cycle de fonctionnement des impulsions de courant sont choisis en fonction de l'énergie de polymérisation de l'agent de durcissement, de la composition d'agent de durcissement, de l'épaisseur de la couche d'agent de durcissement, de la méthode d'application sur la surface de l'agent de durcissement, de la durée d'exposition aux rayonnements des LEDs UV de l'agent de durcissement, de la température et de l'humidité de l'environnement, des caractéristiques des LEDs UV.

5. Dispositif pour agents de durcissement par rayonnement UV comprenant de 5 à 10 % en poids d'acrylates multifonctionnels, comprenant une source de rayonnement UV contenant des LEDs UV, un bloc de commande de la source de rayonnement UV des LEDs UV, un radiateur pour refroidir les LEDs UV, un capteur de température des LEDs UV relié au bloc de commande des LEDs UV, le dispositif étant **caractérisé par le fait que** la source de rayonnement UV possède le système de focalisation optique et l'unité de contrôle des LEDs UV est conçue de telle manière que les LEDs UV reçoivent des impulsions de courant de fréquence de 1 kHz à 10 MHz de manière séquentielle.

6. Dispositif selon la revendication **5**, **caractérisé en ce que** les LEDs UV sont disposées en série sous forme de lignes.

7. Dispositif selon la revendication **5** ou la revendication **6**, **caractérisé en ce que** les LEDs UV ont le même spectre de rayonnement.

8. Dispositif selon l'une quelconque des revendications **5** à **7**, **caractérisé en ce que** le bloc de commande des LEDs UV contient le contrôleur maître connecté à des dispositifs informatiques périphériques, et les modules de puissance de commande des LEDs UV, couplés au contrôleur maître par ses première et seconde entrées de données, et par les fils d'alimentation, ils sont connectés aux LEDs UV correspondantes.

9. Dispositif selon l'une quelconque des revendications **5** à **8**, **caractérisé en ce que** le capteur de température est situé sur le radiateur et que sa sortie est connectée au bloc de commande.

10. Dispositif selon la revendication **8**, **caractérisé en ce que** chaque module de puissance est conçu comme un régulateur de courant à impulsions.

11. Dispositif selon l'une quelconque des revendications **5** à **10**, **caractérisé en ce que** les LEDs UV sont situées sur le radiateur.

12. Dispositif selon l'une quelconque des revendications **5** à **11**, **caractérisé en ce que** le radiateur pour refroidir les LEDs UV est conçu comme un échangeur thermique liquide.
